# FASCICULE DE BREVET EUROPEEN

(11) **EP 2 072 362 B1**
(45) Date de publication et mention de la délivrance du brevet: **14.09.2016**
(21) Numéro de dépôt: 08171025.3
(22) Date de dépôt: 09.12.2008
(51) Int. Cl.: B60T 13/567, F16B 21/18

(54) **Servomoteur pneumatique d'assistance au freinage pour véhicule à cloison interne moobile**
Pneumatischer Bremskraftverstärker mit mobiler Innentrennwand
Pneumatic brake booster with mobile internal partition

(30) Priorité: 21.12.2007 FR 0709122
(43) Date de publication de la demande: 24.06.2009
(73) Titulaire: Robert Bosch GmbH, 70442 Stuttgart (DE)
(72) Inventeur: Leboisne, Cédric, 94170 Le Perreux sur Marne (FR); Michon, Jean-Pierre, 77178 Saint Pathus (FR); Raimbault, Fabrice, 94300 Vincennes (FR); Brisonnet, Séverine, 75019 Paris (FR); Araki, Shigeru, 355-0004 Saitama (JP)

(56) Documents cités:
- WO-A-02/20321
- DE-A1- 4 231 787

## Description

L'invention concerne les servomoteurs pneumatiques d'assistance au freinage pour véhicule.

DE 4231787 décrit un servomoteur pneumatique fixé sur un tablier d'un véhicule à l'aide d'une tige et d'un circlip disposé dans Xune gorge ménagée dans la tige.

On connaît du document WO-02/20 321 un servomoteur pneumatique d'assistance au freinage pour véhicule, comprenant de façon classique un boîtier comportant une paroi avant et une paroi arrière et renfermant une cloison mobile entre celles-ci en définissant deux chambres. Le servomoteur est agencé pour fournir une assistance au freinage du côté de la paroi avant à partir d'une commande de freinage reçue du côté de la paroi arrière et fournie par exemple par le conducteur du véhicule au moyen de la pédale de frein.

Il est connu de fixer la paroi avant à la paroi arrière par sertissage de cette dernière sur la paroi avant en réalisant dans la paroi arrière des découpes repliées en regard de la paroi avant. Toutefois, ces découpes génèrent une opération supplémentaire dans le processus de fabrication et nécessitent un outil particulier, ce qui est coûteux. Elles peuvent également entraîner l'apparition de points de rouille.

Un but de l'invention est de réduire le coût de réalisation du servomoteur et de pallier ce problème de corrosion.

A cet effet, on prévoit selon l'invention un servomoteur pneumatique d'assistance au freinage pour véhicule, comprenant ;
- un boîtier comportant une paroi avant et une paroi arrière et renfermant une cloison mobile, le servomoteur étant agencé pour fournir une assistance au freinage à un organe situé du côté de la paroi avant ; et
- au moins un tirant s'étendant de la paroi avant à la paroi arrière à distance d'un axe principal et d'un bord du boîtier,
dans lequel la paroi avant est fixée au tirant à l'encontre de son éloignement du tirant en direction de l'avant.

Ainsi, la paroi avant étant fixée au tirant, il devient inutile de la fixer à la paroi arrière à l'encontre de son éloignement vers l'avant. On évite donc la réalisation d'une opération sur la paroi arrière et la génération concomitante de sources de corrosion.

Le servomoteur selon l'invention pourra en outre présenter au moins l'une quelconque des caractéristiques suivante :
- le tirant présente une cavité et le servomoteur présente une pièce de fixation logée dans la cavité et s'étendant en avant de la paroi avant ;
- la pièce de fixation est agencée pour avoir été introduite dans la cavité à l'issue d'une déformation élastique ;
- la pièce a une forme annulaire discontinue et est formée par exemple d'un anneau torique ou d'une rondelle plate ;
- la pièce présente au moins une languette élastique apte à pénétrer dans la cavité ;
- la pièce de fixation est agencée pour avoir été introduite dans la cavité à l'issue d'une déformation thermique ;
- le servomoteur présente une pièce de fixation s'étendant en avant de la paroi avant et agencée pour avoir subi une déformation plastique ;
- la pièce a une forme annulaire continue ;
- le tirant présente une cavité et la paroi avant est agencée pour avoir été introduite dans la cavité à l'issue d'une déformation, notamment une déformation élastique ;
- la paroi avant présente au moins une languette déformable élastiquement ;
- le tirant présente une portion déformée par fluage et s'étendant à l'avant de la paroi avant ; et
- la paroi avant est reliée à la paroi arrière sans être fixée à celle-ci à l'encontre de son éloignement vers l'avant.

D'autres caractéristiques et avantages de l'invention apparaîtront encore dans la description suivante de plusieurs modes préférés de réalisation donnés à titre d'exemples non limitatifs en référence aux dessins annexés sur lesquels :
- la figure 1 est une vue partielle en coupe axiale d'un servomoteur montrant la structure générale du servomoteur des modes de réalisation qui vont être décrits ;
- les figures 2 à 5 sont quatre vues partielles en coupe axiale à plus grande échelle analogues à la figure 1 montrant respectivement quatre modes de réalisation du servomoteur selon l'invention ;
- la figure 6 est une vue en élévation d'une pièce du servomoteur de la figure 5 ;
- les figures 7 et 8 sont deux vues analogues aux figures 5 et 6 et montrant un cinquième mode préféré de réalisation de l'invention ; et
- les figures 9 et 10 sont deux vues analogues à la figure 2 montrant des sixième et septième modes de réalisation de l'invention.

Dans la description qui va suivre de différents modes préférés de réalisation de l'invention, les éléments identiques communs à ces différents modes de réalisation portent des références numériques inchangées tandis que les éléments homologues modifiés d'un mode à l'autre portent des références augmentées de 100.

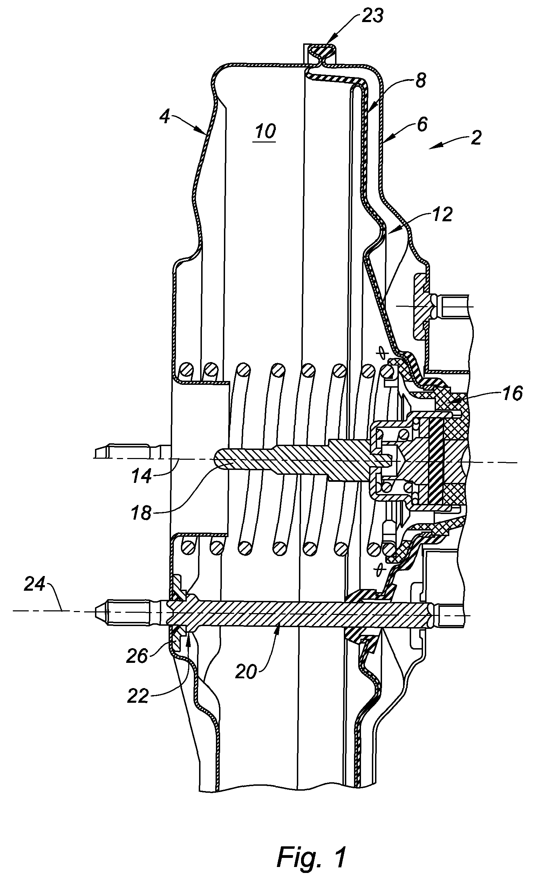

Nous allons tout d'abord décrire en référence à la figure 1 la structure générale des servomoteurs qui seront décrits plus en détail.

Le servomoteur 2 comporte un boîtier comprenant une paroi avant 4 et une paroi arrière 6 métalliques délimitant entre elles une enceinte renfermant une cloison mobile 8. Entre la paroi avant 4 et la cloison 8 est définie une chambre avant 10 tandis qu'une chambre arrière 12 est définie entre la cloison 8 et la paroi arrière 6. La cloison 8 est mobile à translation suivant un axe principal 14 du servomoteur. Le servomoteur comporte un piston 16 également mobile à coulissement suivant l'axe 14 et auquel la cloison mobile est fixée au moyen d'un orifice central de celle-ci.

La chambre avant 10 est destinée à être soumise à une pression P1 inférieure à la pression atmosphérique et générée par une source de dépression du véhicule. La chambre arrière 12 est destinée à être soumise à une pression variant entre la pression P1 et la pression atmosphérique. De façon connue en soi, la variation de la pression dans la chambre arrière 12 engendre le déplacement vers l'avant de la cloison mobile 8 entraînant avec elle le piston 16 solidaire d'une tige d'actionnement 18 s'étendant du côté de la paroi avant 4 et à travers celle-ci. Cette tige est reliée à un maître-cylindre de sorte que le déplacement du piston engendre la commande du maître-cylindre pour le freinage. L'ordre de freinage est transmis par le conducteur à partir de la pédale de frein par exemple et parvient au piston du côté de la paroi arrière 6 c'est-à-dire en partie droite sur la figure 1.

Compte tenu de la transmission du mouvement dans cette chaîne dynamique, on pourrait appeler les parois avant 4 et arrière 6 respectivement parois aval et amont.

Le servomoteur comprend des tirants 20 constituant des entretoises rigides de forme essentiellement allongée rectiligne s'étendant parallèlement à l'axe 14. Les tirants sont par exemple au nombre de deux. Ils s'étendent chacun à distance de l'axe 14 et d'un bord périphérique 23 du boîtier. Ils sont uniformément répartis autour de l'axe 14. Chaque tirant 20 traverse les parois avant 4 et arrière 6 ainsi que la cloison 8. Les tirants s'étendent dans des zones centrales planes des parois avant 4 et arrière 6 perpendiculaires à l'axe 12. Chaque tirant s'étend en saillie de la paroi avant et de la paroi arrière à l'extérieur du boîtier suivant l'axe 14.

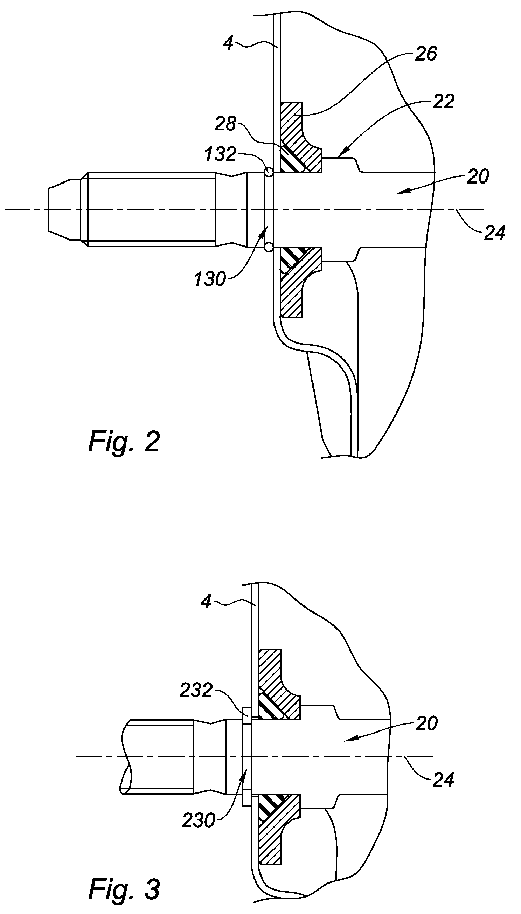

En référence aux figures 1 et 2, chaque tirant 20 présente un épaulement annulaire 22 s'étendant en saillie du tirant suivant une direction radiale à un axe 24 du tirant. Cet épaulement s'étend à l'intérieur de la chambre avant 10 en regard et à distance de la paroi avant 4. Le servomoteur présente une rondelle d'appui 26 prenant appui suivant la direction de l'axe 24 vers l'avant contre la face interne de la paroi avant 4 et vers l'arrière contre l'épaulement 22. La rondelle présente une face chanfreinée contiguë au tirant 20 et à la paroi avant 4 et définissant un logement pour un joint d'étanchéité 28 en élastomère prenant appui sur la paroi 4, la rondelle 26, et le tirant 20. La rondelle présente un profil général en V.

Dans le premier mode de réalisation illustré à la figure 2, le tirant 20 présente une cavité formée en l'espèce par une gorge annulaire 130 d'axe 24. Cette gorge est contiguë à la paroi 4 à l'extérieur du boîtier. Cette gorge présente un fond plat et deux flancs perpendiculaires à l'axe 24. Pour chaque tirant 20, le servomoteur comprend une pièce de fixation 132 logée dans la cavité et s'étendant en avant de la paroi 4 en étant contiguë à celle-ci et en contact avec celle-ci. La pièce de fixation 132 est agencée pour avoir été introduite dans la cavité 130 à l'issue d'une déformation élastique. La pièce, dans le présent exemple, a une forme annulaire discontinue et est formée par un jonc en forme d'anneau torique. Il s'agit donc d'un cercle presque fermé qui peut être ouvert pour agrandir son diamètre et qui reprend son diamètre initial spontanément par élasticité. Ainsi logé dans la cavité 130, le jonc 132 interdit tout mouvement de la paroi 4 en direction de l'avant par rapport au tirant 20.

Dans le deuxième mode de réalisation illustré à la figure 3, la pièce de fixation 232 est similaire à celle de la figure 2 mais a non pas une forme torique, c'est-à-dire à section locale circulaire, mais une forme de rondelle plate, c'est-à-dire à section locale rectangulaire. Elle est cependant pareillement déformable élastiquement pour pouvoir être logée dans la cavité 230.

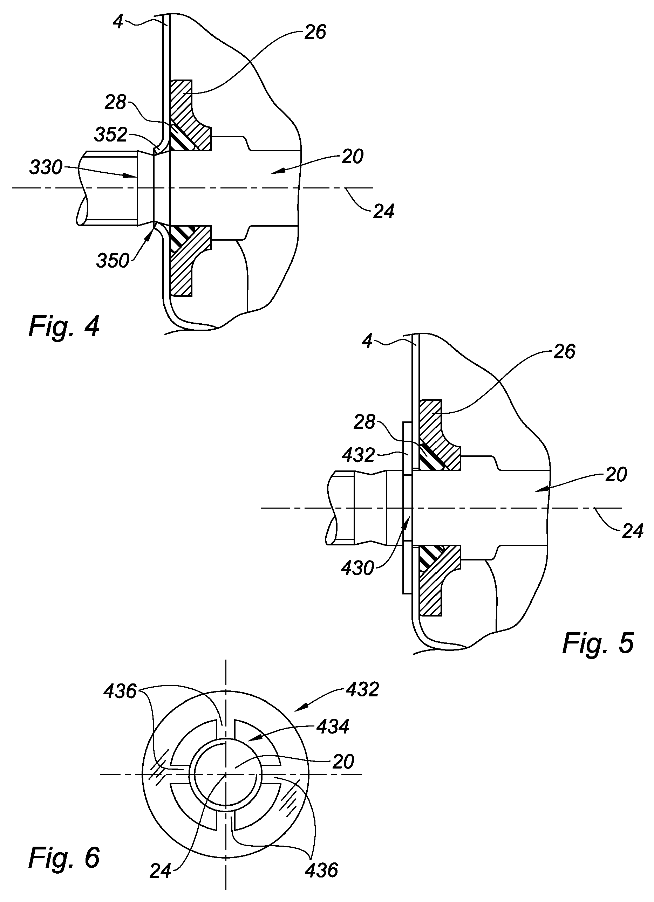

Dans le troisième mode de réalisation illustré à la figure 4, les tirants 20 ne sont pas associés à des pièces de fixation rapportées. La paroi avant 4 présente pour chaque tirant 20 un orifice circulaire 350 et est déformée au voisinage de cet orifice en direction de l'avant de façon à former une cheminée 352. La cavité 330 a la forme d'une gorge de profil localement en triangle isocèle, les deux flancs de la gorge formant les deux côtés égaux du triangle. Lors de la fabrication de la paroi 4, le diamètre interne de la cheminée 352 est suffisant pour lui permettre d'être enfilée sur l'extrémité du tirant 20 jusqu'à parvenir au droit de la gorge 330. Dans cette position, on déforme ensuite la cheminée de façon plastique pour tendre à la replacer dans le plan de la paroi 4, ce qui l'enfonce dans le fond de la gorge 330 et bloque la paroi en position sur le tirant.

En variante, on pourra prévoir que la cheminée est formée de languettes et est donc discontinue autour de l'axe 24. En variante également, on pourra prévoir que ces languettes sont élastiques et que la cheminée est fabriquée en donnant aux languettes une configuration telle qu'elles se déforment élastiquement lorsqu'on enfile la paroi sur le tirant 20 et se placent automatiquement dans la gorge 330 une fois arrivées au droit de celle-ci.

Dans le quatrième mode de réalisation illustré aux figures 5 et 6, la pièce de fixation 432 a cette fois la forme d'une rondelle plate au centre de laquelle est ménagée une ouverture 434 de diamètre très supérieur au diamètre du tirant 20 au voisinage de la cavité 430. La pièce 432 présente une ou plusieurs languettes 436 s'étendant en saillie dans l'ouverture 434 en direction de l'axe 24 de la rondelle. Ces languettes sont ici au nombre de quatre et sont régulièrement réparties autour de l'axe. Chaque languette 436 est élastiquement déformable pour s'étendre au-delà ou en deçà du plan de la rondelle constitué par le plan du dessin sur la figure 6. La distance séparant les extrémités libres des languettes situées en vis-à-vis est inférieure au diamètre externe du tirant 20 au voisinage de la cavité 430 mais légèrement supérieure au diamètre du tirant 20 au fond plat de la gorge 430.

Pour fixer la pièce 432 au tirant 20, on l'enfile sur l'extrémité libre du tirant et on la fait glisser jusqu'à la paroi avant 4. Un peu avant l'arrivée au niveau de la gorge 430, le diamètre relativement grand du tirant provoque la flexion élastique des languettes 436 en direction de l'avant. Une fois la pièce 432 arrivée au droit de la gorge 430, les languettes 436 reprennent élastiquement leur position normale dans le plan de la rondelle comme illustré sur la figure 5. Dans cette position, la rondelle crantée bloque tout mouvement vers l'avant de la paroi avant 4.

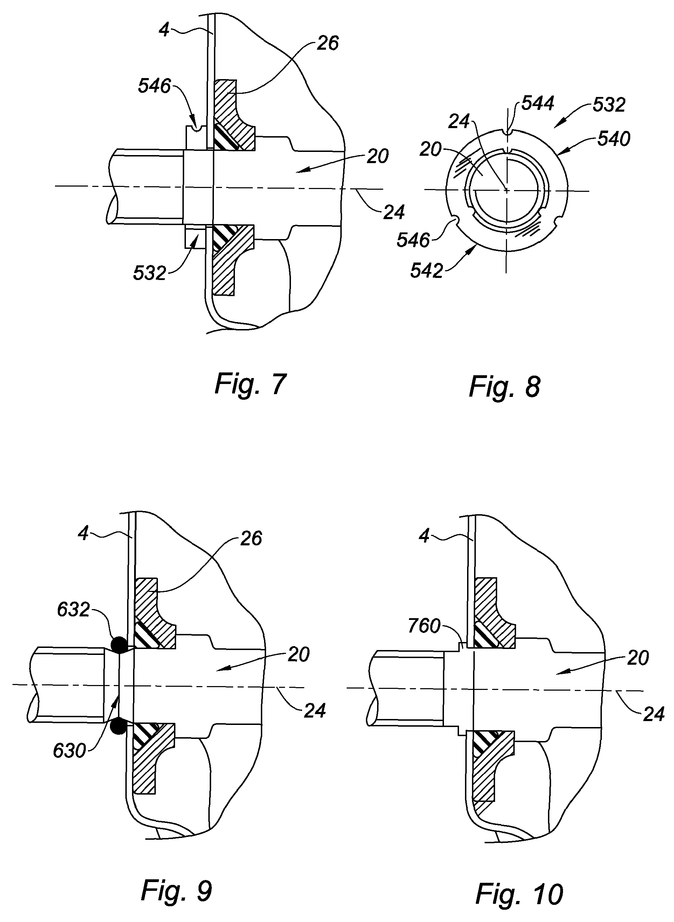

Dans le cinquième mode de réalisation illustré aux figures 7 et 8, la pièce de fixation 532 a une forme annulaire continue, localement à section rectangulaire. Le tirant 20 ne présente pas de cavité analogue à la cavité 130. La rondelle 532 présente des faces coaxiales externe 540 et interne 542 de forme cylindrique. La face interne 542 présente un diamètre supérieur au diamètre de la portion du tirant 20 s'étendant au droit de la rondelle lorsque celle-ci est en contact avec la paroi avant 4 comme sur la figure 7. La rondelle présente trois reliefs 544 s'étendant radialement en saillie en direction de l'axe. Les reliefs 544 sont ici au nombre de trois. La rondelle est réalisée de sorte que les reliefs 544, au départ, sont simultanément tous en contact avec la face externe de la portion précitée du tirant 20. Au droit des reliefs 544, la face externe 540 de la rondelle présente des cavités 546 ayant une forme femelle complémentaire de la forme mâle des reliefs 544. La rondelle sera de préférence réalisée en métal.

Lors de l'assemblage du servomoteur, on enfile chaque rondelle 532 sur le tirant 20 correspondant jusqu'à la mettre en contact avec la paroi avant 4. Ensuite, au moyen d'un outil adapté, on déforme plastiquement la rondelle de façon à altérer sa forme circulaire. A l'issue de cette déformation, la rondelle bloque par friction la paroi avant 4 à l'encontre de son déplacement vers l'avant.

Dans le sixième mode de réalisation illustré à la figure 9, la pièce de fixation 632 a à nouveau la forme d'un anneau torique continu à section locale circulaire. Le tirant 20 présente au droit de l'anneau, lorsque celui-ci est en contact de la paroi avant 4, une gorge 630 relativement peu profonde et à profil triangulaire de sorte que la gorge est formée par deux flancs inclinés formant en section axiale les deux côtés égaux d'un triangle isocèle. La rondelle 632 est fabriquée en métal et dimensionnée à la fabrication de sorte que son diamètre interne soit légèrement supérieur au diamètre du tirant 20 au fond de la gorge 630 mais inférieur au diamètre du tirant au bord de la gorge.

Pour installer la rondelle 632, on commence par la chauffer à une température permettant de la dilater de telle sorte que son diamètre interne soit suffisant pour permettre de l'enfiler sur le tirant jusqu'à la gorge 630. On la laisse ensuite refroidir de sorte qu'elle se rétracte et s'installe au fond de la gorge bloquant ainsi la paroi avant 4 à l'encontre de son déplacement vers l'avant. Il s'agit donc d'un mode de fixation par rétreint thermique.

Enfin, dans le septième mode de réalisation illustré à la figure 10, le tirant 20 est dépourvu d'une cavité du type de la cavité 130. Après que le tirant a été enfilé dans l'orifice de la paroi 4, une portion 760 du tirant extérieure au boîtier s'étendant en avant de la paroi 4 est déformée plastiquement pour venir en appui axial vers l'arrière sur la paroi 4 et ainsi bloquer celle-ci à l'encontre de tout mouvement vers l'avant. Il s'agit donc d'un mode de réalisation avec sertissage du tirant

Dans chacun de ces modes de réalisation, la paroi avant 4 est reliée à la paroi arrière 6 au niveau du bord périphérique 23 du boîtier comme illustré sur la figure 1. Toutefois, elle ne sera pas nécessairement fixée directement à la paroi arrière à l'encontre de son déplacement vers l'avant. En effet, la fixation procurée à cet égard par les tirants 20 apparaît suffisante compte tenu des efforts auxquels est soumise la paroi avant 4.

Bien entendu, on pourra apporter à l'invention de nombreuses modifications sans sortir du cadre de celle-ci.

On pourra notamment varier la forme et le nombre des tirants.

## Revendications

1. Servomoteur pneumatique (2) d'assistance au freinage pour véhicule, comprenant ;
- un boîtier comportant une paroi avant (4) et une paroi arrière (6) et renfermant une cloison mobile (8), le servomoteur étant agencé pour fournir une assistance au freinage à un organe (18) situé du côté de la paroi avant ; et
- au moins un tirant (20) s'étendant de la paroi avant (4) à la paroi arrière (6) à distance d'un axe principal (14) et d'un bord (22) du boîtier,
caractérisé en que la paroi avant (4) est fixée au tirant (20) à l'encontre de son éloignement du tirant en direction de l'avant et en ce que le tirant (20) présente une cavité (130, 230, 430, 630) et le servomoteur présente une pièce de fixation (132 ; 232 ; 432 ; 632) logée dans la cavité et s'étendant en avant de la paroi avant (4).

2. Servomoteur selon la revendication 1, **caractérisé en ce que** la pièce de fixation (132 ; 232 ; 432) est agencée pour avoir été introduite dans la cavité à l'issue d'une déformation élastique.

3. Servomoteur selon l'une quelconque des revendications 1 ou 2, **caractérisé en ce que** la pièce (132 ; 232) a une forme annulaire discontinue et est formée par exemple d'un anneau torique (132) ou d'une rondelle plate (232).

4. Servomoteur selon l'une quelconque des revendications 1 à 3, **caractérisé en ce que** la pièce (432) présente au moins une languette élastique (436) apte à pénétrer dans la cavité (430).

5. Servomoteur selon l'une quelconque des revendications 2 à 4, **caractérisé en ce que** la pièce de fixation (632) est agencée pour avoir été introduite dans la cavité (630) à l'issue d'une déformation thermique.

6. Servomoteur selon l'une quelconque des revendications 1 à 5, **caractérisé en ce que** le servomoteur présente une pièce de fixation (532) s'étendant en avant de la paroi avant et agencée pour avoir subi une déformation plastique.

7. Servomoteur selon la revendication 6, **caractérisé en ce que** la pièce (532) a une forme annulaire continue.

8. Servomoteur selon l'une quelconque des revendications 1 à 7, **caractérisé en ce que** le tirant (20) présente une cavité (330) et la paroi avant (4) est agencée pour avoir été introduite dans la cavité à l'issue d'une déformation, notamment une déformation élastique.

9. Servomoteur selon l'une quelconque des revendications 1 à 8, **caractérisé en ce que** la paroi avant (4) présente au moins une languette déformable élastiquement.

10. Servomoteur selon l'une quelconque des revendications 1 à 9, **caractérisé en ce que** le tirant (20) présente une portion (760) déformée par fluage et s'étendant à l'avant de la paroi avant (4).

## Patentansprüche

1. Pneumatischer Servomotor (2) zur Bremsunterstützung für ein Fahrzeug, umfassend;
- ein Gehäuse, welches eine vordere Wand (4) und eine hintere Wand (6) aufweist und eine bewegliche Zwischenwand (8) umschließt, wobei der Servomotor ausgebildet ist, um einem an der Seite der vorderen Wand befindlichen Organ (18) eine Bremsunterstützung zu liefern; und
- mindestens eine Stange (20), die sich von der vorderen Wand (4) zur hinteren Wand (6) in Abstand zu einer Hauptachse (14) und einem Rand (22) des Gehäuses erstreckt,
**dadurch gekennzeichnet, dass** die vordere Wand (4) an der Stange (20) entgegen ihrer Wegbewegung von der Stange in Richtung der Vorderseite befestigt ist und dass die Stange (20) eine Vertiefung (130, 230, 430, 630) aufweist und der Servomotor ein Befestigungsteil (132; 232; 432; 632) aufweist, das in der Vertiefung sitzt und sich vor der vorderen Wand (4) erstreckt.

2. Servomotor nach Anspruch 1, **dadurch gekennzeichnet, dass** das Befestigungsteil (132; 232; 432) ausgebildet ist, um nach einer elastischen Verformung in die Vertiefung eingeführt worden zu sein.

3. Servomotor nach einem der Ansprüche 1 oder 2, **dadurch gekennzeichnet, dass** das Teil (132; 232) eine unterbrochene Ringform besitzt und zum Beispiel durch einen O-Ring (132) oder eine Flachscheibe (232) gebildet wird.

4. Servomotor nach einem der Ansprüche 1 bis 3, **dadurch gekennzeichnet, dass** das Teil (432) mindestens eine elastische Zunge (436), die in der Lage ist, in die Vertiefung (430) einzudringen, aufweist.

5. Servomotor nach einem der Ansprüche 2 bis 4, **dadurch gekennzeichnet, dass** das Befestigungsteil (632) ausgebildet ist, um nach einer thermischen Verformung in die Vertiefung (630) eingeführt worden zu sein.

6. Servomotor nach einem der Ansprüche 1 bis 5, **dadurch gekennzeichnet, dass** der Servomotor ein Befestigungsteil (532) aufweist, das sich vor der vorderen Wand erstreckt und ausgebildet ist, um eine plastische Verformung erfahren zu haben.

7. Servomotor nach Anspruch 6, **dadurch gekennzeichnet, dass** das Teil (532) eine geschlossene Ringform besitzt.

8. Servomotor nach einem der Ansprüche 1 bis 7, **dadurch gekennzeichnet, dass** die Stange (20) eine Vertiefung (330) aufweist und die vordere Wand (4) ausgebildet ist, um nach einer Verformung, insbesondere einer elastischen Verformung, in die Vertiefung eingeführt worden zu sein.

9. Servomotor nach einem der Ansprüche 1 bis 8, **dadurch gekennzeichnet, dass** die vordere Wand (4) mindestens eine elastisch verformbare Zunge aufweist.

10. Servomotor nach einem der Ansprüche 1 bis 9, **dadurch gekennzeichnet, dass** die Stange (20) einen Abschnitt (760), der durch Fließen verformt wurde und sich vor der vorderen Wand (4) erstreckt, aufweist.

## Claims

1. Pneumatic brake booster (2) for a vehicle, comprising:
- a casing comprising a front wall (4) and a rear wall (6) and enclosing a mobile partition (8), the booster being designed to boost the braking effect of a member (18) situated on the side of the front wall; and
- at least one through-bolt (20) extending from the front wall (4) to the rear wall (6) some distance from a main axis (14) and from an edge (22) of the casing,
**characterized in that** the front wall (4) is fixed to the through-bolt (20) to prevent it from moving away from the through-bolt in the forward direction and **in that** the through-bolt (20) has a cavity (130, 230, 430, 630) and the booster has a fixing piece (132; 232; 432; 632) housed in the cavity and extending forward of the front wall (4).

2. Booster according to Claim 1, **characterized in that** the fixing piece (132; 232; 432) is designed to have been introduced into the cavity following elastic deformation.

3. Booster according to either one of Claims 1 and 2, **characterized in that** the piece (132; 232) is of discontinuous annular shape and is formed for example from a torus-shaped ring (132) or a flat washer (232).

4. Booster according to any one of Claims 1 to 3, **characterized in that** the piece (432) has at least one elastic tab (436) able to enter the cavity (430).

5. Booster according to any one of Claims 2 to 4, **characterized in that** the fixing piece (632) is designed to have been introduced into the cavity (630) following thermally-induced deformation.

6. Booster according to any one of Claims 1 to 5, **characterized in that** the booster has a fixing piece (532) extending forward of the front part and designed to have undergone plastic deformation.

7. Booster according to Claim 6, **characterized in that** the piece (532) is of continuous annular shape.

8. Booster according to any one of Claims 1 to 7, **characterized in that** the through-bolt (20) has a cavity (330) and the front wall (4) is designed to have been introduced into the cavity following deformation, notably elastic deformation.

9. Booster according to any one of Claims 1 to 8, **characterized in that** the front wall (4) has at least one elastically deformable tab.

10. Booster according to any one of Claims 1 to 9, **characterized in that** the through-bolt (20) has a portion (760) deformed by plastic flow and extending forward of the front wall (4).
